Europäisches Patentamt

European Patent Office

Office européen des brevets

(19)

(11) Publication number: **0 134 640**

**A1**

(12) ## EUROPEAN PATENT APPLICATION

(21) Application number: **84304440.5**

(22) Date of filing: **28.06.84**

(51) Int. Cl.⁴: **G 11 B 27/06**

(30) Priority: **07.07.83 GB 8318432**

(43) Date of publication of application:
**20.03.85 Bulletin 85/12**

(84) Designated Contracting States:
**AT BE CH DE FR GB IT LI LU NL SE**

(71) Applicant: **Collins, Stephen**
**5 Templar Street**
**London SE5(GB)**

(72) Inventor: **Hunt, William Joseph**
**97 Walmington Fold**
**London. N 12(GB)**

(74) Representative: **Matthews, Howard Nicholas et al,**
**MATTHEWS HADDAN & CO Haddan House 33 Elmfield**
**Road**
**Bromley Kent BR1 1SU(GB)**

(54) Splicing apparatus and dispenser therefor.

(57) A dispenser for splicing magnetic tape includes a base
18 with mounting blocks 10 and 11 having a groove 13 for
receiving the magnetic tape to be spliced. A plate 12 and the
lower part of housing body 14 holds the tape ends and an
adhesive item 35 on a carrier tape 34 from a cassette 32 is
separated therefrom on lowering arm 30 and is held by static
attraction on a resilient pad 51 prior to application to the
tape. The pad applies the splice in such a way that the
adjacent cassette does not interfere with its operation.

FIG.1

Croydon Printing Company Ltd.

0134640

TITLE:  <u>SPLICING APPARATUS AND DISPENSER THEREFOR</u>.

The invention relates to a dispenser associated with apparatus suitable for splicing tape such as magnetic recording tape particularly but not exclusively, of the type used with video recorders, and a cassette therefor.  Because of the ultra-fine nature of both the magnetic and the adhesive joining tape, any splicing must be both accurately applied and durable.

Two arrangements for rapidly joining magnetic recording tape are disclosed in my EPC applications 8032791.1 and 82300986.5.

When dealing with video cassette tape, it is especially difficult to produce a system which is capable of accurate and repeated operation due to the relatively large adhesive item required yet which must be very thin to avoid problems on the video recorder when used thereafter.

The present arrangement is concerned with an improved configuration.

According to the invention there is provided a dispenser for dispensing adhesive items mounted on a carrier strip characterised by means for effecting movement of the carrier strip around a separation edge to cause separation of an adhesive item therefrom and static attraction applicator means adjacent the seperation edge for receiving the separated item and for applying it to an object.

The invention will now be described by way of example with reference to the accompanying drawings in which:

FIGURE 1 shows one embodiment of the splicing apparatus including the dispenser and cassette;

FIGURE 2 shows the apparatus ready to receive recording tape;

FIGURE 3 shows a view of the base of the apparatus;

FIGURE 4 shows an end view of the apparatus;

FIGURE 5 shows a section detail of the dispenser taken along the line A-A of Figure 1;

FIGURE 6 shows an embodiment of the replaceable cassette;

FIGURE 7 shows a front view of the cassette;

FIGURE 8 shows the configuration of the adhesive items and carrier strip;

FIGURE 9 shows an alternative embodiment of the dispenser of the splicing apparatus;

FIGURE 10 shows a sectional detail of the dispenser taken along the line B-B of Figure 9;   and

FIGURE 11 shows an underside detail of the dispenser.

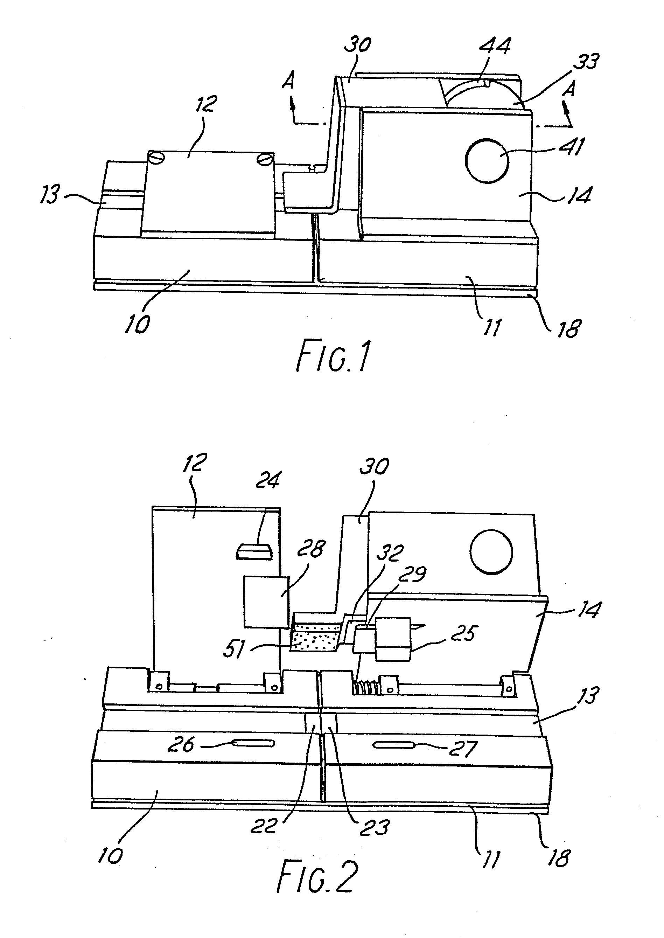

The splicing apparatus shown in Figures 1 to 4 includes a base 18 having first and second pivotable mounting block portions 10 and 11 thereon.   A plate 12 for retaining the tape to be spliced, within channel 13, is independently pivotable relative to the base 18 and block 10 and the dispenser mechanism (described below) is mounted in housing 14 which is independently pivotable relative to base 18 and block 11. The pivoting action is provided by lugs 15 mounted on shaft 16. Base 18 includes apertured extensions 19 through which the shaft 16 passes. Compression spring 17 urges block portions 10 and 11 together to ensure intimate contact between the blades 20 and 21 and the respective plates 22 and 23 which provide the cutting action. Spring 17 also increases the resistance to pivoting experienced by the housing 14 so that this tends to remain in the raised position to aid tape insertion. In the lowered position plate 12 and housing 14 are held by lugs 24 and 25 co-operating with apertures 26 and 27 respectively, so as to firmly retain the inserted tape within groove 13. This is advantageous when dealing with ultra-fine material such as video tape. This retention is aided by pressure fingers 28 and 29.

The cutting blades 20 and 21 are carried by respective retaining blocks 31 and 32, which blades extend downwards across the channel to cooperate with the plates 22 and 23 when either mounting block portion 11 or 10 is lowered from a previously raised position. To assist in this co-operation, the angled blades typically have a rounded start to facilitate mating and to prevent the blade edge from attempting to cut into the plate. The blades are typically of thin steel to give resilient co-operation with the plate. Their location only in the region adjacent the channel avoids accidental operator contact.

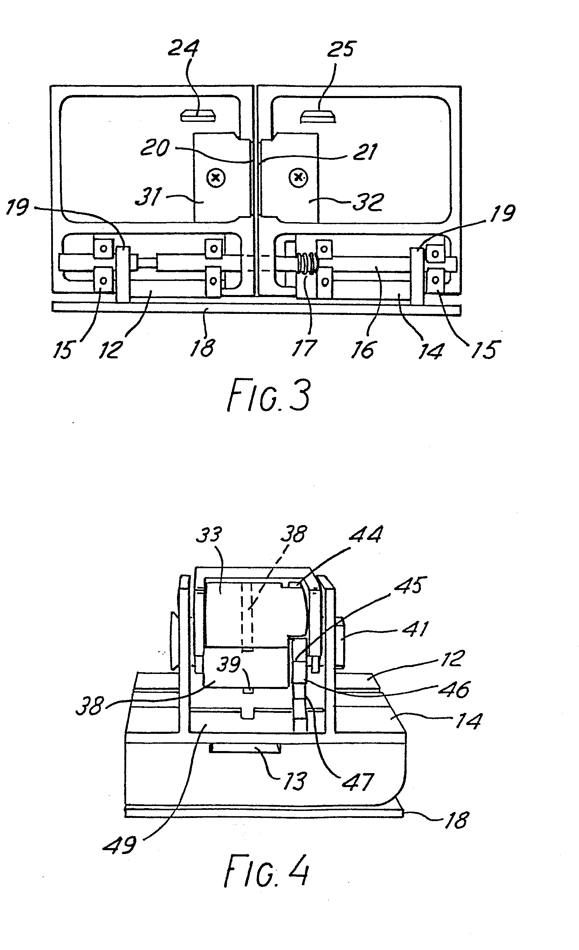

To prepare the tape ready for splicing, the right hand portion of the tape is placed into channel 13 (with the housing 14 raised as in Figure 2). The housing 14 is then lowered to hold the tape in place. Block 10 is then raised or may have been raised earlier and on descent will cut the tape neatly and accurately due to the shearing action of the blade 20 and plate 23.

The left hand portion of the tape can then be placed in the block portion 10 and held by lowering the plate 12.

The block 11 is then raised and on descent will cut this tape portion neatly by the shearing action of blade 21 and plate 22.

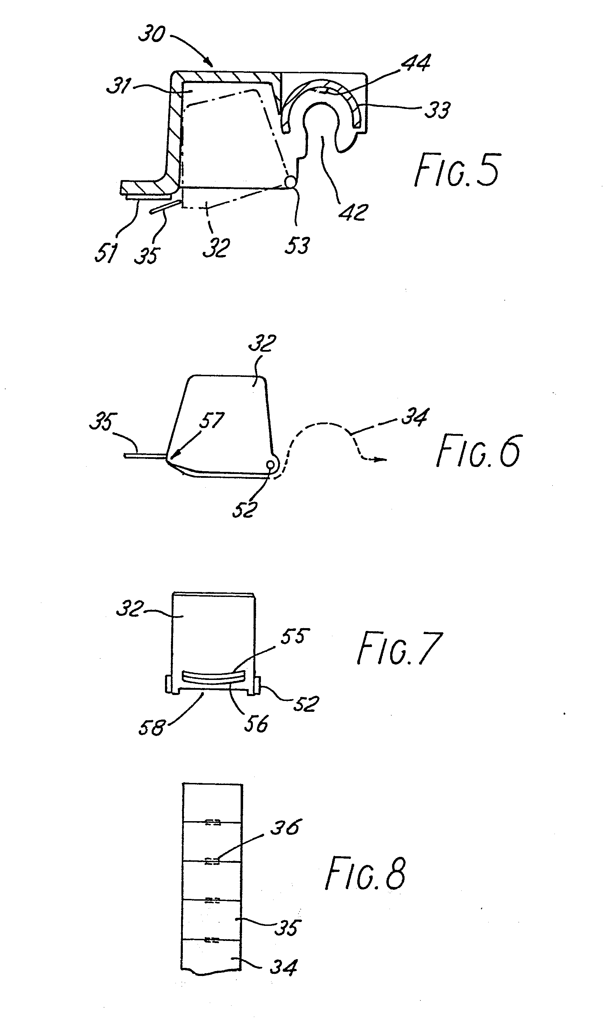

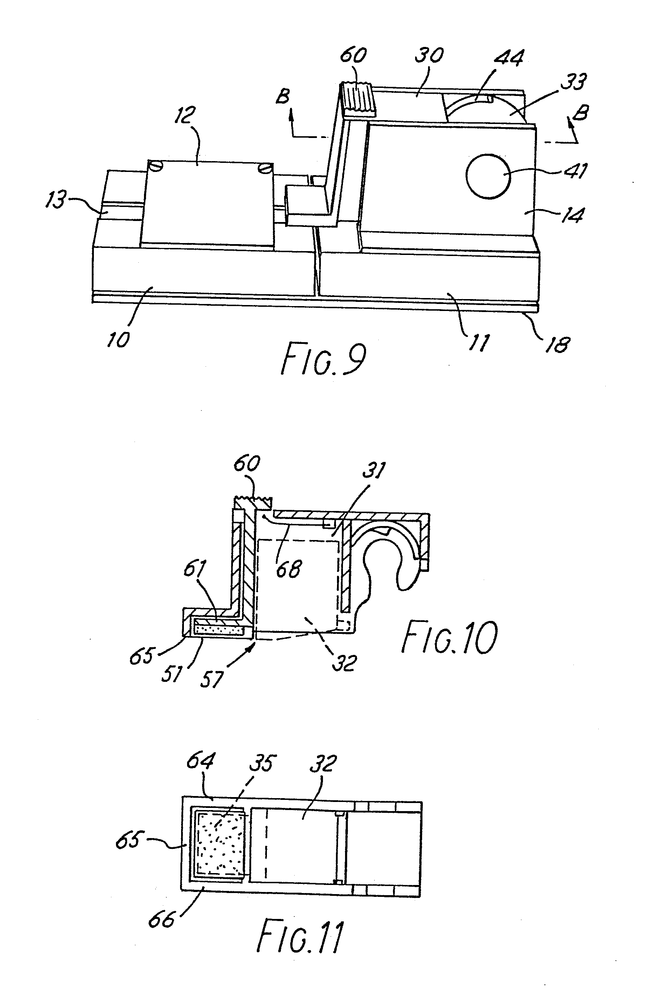

The actual splicing action is achieved by the integral dispenser. The dispenser (see also Figures 5 to 8) includes arm 30 which defines a chamber 31 for retaining a disposable cassette 32. The cassette contains a roll of joining material which comprises a strip of backing material 34 carrying pre cut lengths of adhesive joining tape 35 which abut each other (although could be spaced apart if desired). Slits 36 within the carrying material 34 are provided to co-operate with the dispenser drive. To effect this drive, the dispenser includes arcuate portion 33 which is configured to locate over sprocket wheel 37. The arcuate portion 33 includes an internal slot 38 which receives the sprockets 39 as each locates within slots 36 of the carrier material 34, during the drive operation. A shaft 41 carries the sprocket wheel 37 as well as the pivotable portion 42 of the dispenser. The arcuate portion 33 of the arm 30 carries a pawl 44 which co-operates with a one of the detents 45 in ratchet wheel 46 which wheel is rotatable about shaft 41 in fixed relationship with sprocket wheel 39.

A further pawl 47 fixed to housing 14 also engages the sprocket wheel.

A stop plate 49 limits the pivoting action of the arm 30 away from the splicing region.

The disposable cassette is enclosed except for the aperture provided between the pair of guides 55 and 56. These guides are curved (e.g. 100 mm radius) in order to ensure anti-gravitational cross-tension over the adhesive tape item 35 so that it tends to extend parallel to the face of applicator pad 51. The radiused edge 57 (e.g., 1 mm or less) also aids separation as the backing strip 34 is drawn thereover by the sprocket wheel 38. A channel 58 at the base of the cassette housing, guides the movement of the strip 34 rearwards and after passing between the region 33 and the sprocket wheel 38 is expelled from the rear of the dispenser housing. The cassette housing also includes lugs 52 which co-operate with apertures 53 within the dispenser so that the cassette is partially pivotable within the chamber 31. Thus in Figure 5 the cassette is shown pivoted downwards into a lower position delimited by the chamber wall. The cassette can pivot upwards so as to be totally within chamber 31 the upper position being determined by the wall and adjacent arcuate portion 33. The upper (upright) position corresponds to that shown in Figure 6.

The pivoting action of the cassette ensures that the adhesive tape item 35 is clear of the chamber 31 and applicator pad 51 on commencement of the dispensing cycle (with the cassette in the Figure 5 position) and as the arm 30 is lowered and comes down towards the splicing position, the cassette moves up into the chamber 31 because of the presence of contact finger 29. Thus this contact finger serves two purposes, viz: holding the tape to be spliced, and acts as a withdrawing mechanism for the cassette 32 as the arm 30 moves towards the splicing position. The gap between pad 51 and finger 29 ensures sufficient space for the unhindered operation of the adhesive tape dispensing. The withdrawal of the cassette into the chamber 32 prevents the cassette interfering with the splicing operation. Raising the arm 30 from the horizontal position shown in Figure 1 into a vertical position causes the pawl 44 to engage one of the detents 45 in ratchet wheel 46, and thus the ratchet wheel and associate sprocket wheel 38 rotate during the arm raising operation so that there is no movement of the sprocket 39 relative to the arm. This prevents unwanted withdrawal of the backing carrier strip 34 from the cassette. In the raised position the arm travel is terminated by stop 49. In this position the pawl 47 engages a sprocket 45 so that on downward movement of the arm 30, the wheels 46 and 38 do not move. In effect this causes rearwards travel of the sprockets 39 relative to arm movement and thus draws the carrier strip 34 from the cassette. The groove 38 receives the sprockets 39 and tends to effect bending of the carrier strip centrally so as to cause the sprockets 39 to positively engage in the slits 36 and prevent any slipping of the drive. During the initial stage of this downward movement, the cassette is in the lower position shown in Figure 5, due to gravity, and the adhesive item 35, declined, moves across the face of pad 51. Towards the end of the downward movement, the cassette retreats into the chamber 31, but by then the adhesive item is just separating from the carrier and its non-adhesive surface is held by static electricity against the face of the pad 51 and presents its adhesive surface for splicing the two tape portions held within channel 13. Splicing automatically occurs at the moment of completion of the downward travel of the arm 30. Although the initial inclination of the adhesive item 35 is away from the pad 51 the static caused by the stripping action generates strong attraction thereto especially in the case of relatively large width adhesive splices required for video tapes (e.g., 12 mm or larger). The static force may be regulated as necessary to ensure the successful dispensing of the item 35 from the cassette. Guide means may also be provided adjacent the pad 51 to prevent any tendency to lateral movement by the adhesive item 35.

Although static attraction is normally a disadvantage and a problem, in the present configuration this has been harnessed to produce an advantageous mechanism for retaining the separated adhesive item prior to application to the tape ends to complete the splice. In practice the adhesive item may be in the region of 6 microns thick and the carrier strip 12 microns. The adhesive item and the carrier strip are both comprised of plastics material (e.g., polyester material) capable of generating substantial static charge caused by the stripping action on separation so that sufficient attractive force is achieved to cause the separated item to adhere to the pad 51.    The foam pad is also chosen for  suitability e.g., P.V.C. or polyethelene.

Replacement of the cassette,  when  empty,  is achieved  by removal from the chamber,  and inserting a new one with the carrier strip passed to the sprockets. Shaft  41 can be partially withdrawn to assist in  this operation if desired.    Flats provided on part of  the shaft  can  cooperate with the pivotable portion 42  of the dispenser,  in the partially withdrawn position, to allow the entire dispenser to be removed.

In an alternative embodiment shown in Figures 9  to 11,  the dispenser aspect of the apparatus is modified. The  separated adhesive item is attracted to the pad 51 using  a  similar operation to  that  described  above, however, the item held by the pad 51 is then applied by manual operation of the depressor 60 which is linked to the pad by extension 61.    The depressor 60 is normally held in its upper position by means of spring 68.    The separated, statically charged item having been stripped as the backing strip passes the cassette separator edge 57  is guided by means of the side walls 64,  65 and 66 to  locate it  centrally beneath the pad  as  it  is attracted thereto to assist in providing  repeatability of  operation.    The downward movement  of  the  pad relative  to  the cassette 32 ensures that the item  35 can  be successfully applied for splicing  without  the necessity of  moving  the cassette itself  within  the dispenser chamber 31. Hence the cassette can simply be a resistance fit therein on faces not associated with operation of the depressor 60.    The side walls 64 - 66 assist as guides during the downward movement of pad 51.

The combination of the accurate cutting of the tape to be joined and the reliable and accurate dispensing of the adhesive splicing items produces a strong splice ideally suited for the severe operating conditions associated with video tape and other fine magnetic tapes, although the arrangement would have utility for other tapes or strip material.

CLAIMS:

1. A dispenser for dispensing adhesive items (35) mounted on a carrier strip (34) characterised by means (37) for effecting movement of the carrier strip around a separation edge (57) to cause separation of an adhesive item therefrom and static attraction applicator means (30, 51; 60, 51) adjacent the separated edge for receiving the separated item and for applying it to an object.

2. A dispenser as claimed in Claim 1, wherein said applicator means is capable of movement relative to the separation edge to effect the application of the adhesive item to the object.

3. A dispenser as claimed in Claim 2, wherein said separation edge (57) is provided on a replaceable cassette (32) adapted to provide a reservoir of adhesive items on the carrier strip.

4. A dispenser as claimed in Claim 1, 2 or 3, wherein the applicator means includes boundary means (64 - 66) for locating the separated item in the correct position during the attraction step and for guiding the passage of adhesive item during the application step.

5. A dispenser as claimed in Claim 4, wherein the boundary means includes a triple walled area for receiving a rectangular adhesive item.

6. A dispenser as claimed in any one of Claims 1 to 5, including a manually operable depressor (60) for causing movement of the applicator relative to the separation edge (57).

7. A dispenser as claimed in Claim 3, wherein the cassette is provided partially within a chamber (31) adjacent the applicator means and adapted to be movable within the chamber after separation of the adhesive item and prior to application of the adhesive item.

8. A dispenser as claimed in any preceding claim wherein the carrier strip (34) and the adhesive items (35) are each fabricated from a plastics material.

9. A dispenser as claimed in any preceding claim including tape splicing means having a pivotable retainer (12, 14) for holding each sector of the tape within a guide groove.

10. A dispenser as claimed in Claim 9, including cutting blades (20, 21) with substantially planar faces normally adjacent the groove and pivotable to effect the cutting action.

11. A dispenser as claimed in Claim 11, wherein the cutting edge of the blade is resilient to ensure an efficient cutting action.

FIG.1

FIG.2

FIG. 3

FIG. 4

30

31

44

33

FIG.5

51 35 32 53 42

32

35 57 34 FIG.6

52

32 55 FIG.7

58 56 52

36 FIG.8

35

34

FIG.9

FIG.10

FIG.11

## DOCUMENTS CONSIDERED TO BE RELEVANT

EP 84304440.5

| Category | Citation of document with indication, where appropriate, of relevant passages | Relevant to claim | CLASSIFICATION OF THE APPLICATION (Int. Cl.) 4 |
|---|---|---|---|
| A | US - A - 4 180 181 (BRANDWEIN)<br>* Abstract; fig. 1-21; column 3, lines 6-48 *<br>-- | 1,3,4, 8 | G 11 B 27/06 |
| A | US - A - 3 537 940 (NAGANO)<br>* Abstract; fig. 1-11; column 3, lines 46-53 *<br>-- | 1,3,4, 6,8,10, 11 | |
| A | US - A - 3 642 555 (NAGOSHI)<br>* Abstract; fig. 1-15 *<br>-- | 1,2,3, 4,6,7, 8,10, 11 | |
| A | GB - A - 1 426 300 (THOMAS)<br>* Fig. 5,6; claims 1-14 *<br>-- | 1,3 | |
| A | DE - A - 1 774 200 (KODAK)<br>* Fig. 1-12; claims 1-7 *<br>---- | 1,3,4, 6,7,8, 9,10, 11 | **TECHNICAL FIELDS SEARCHED (Int. Cl.) 4**<br><br>G 11 B 27/00<br>B 65 H 5/00<br>B 31 F 5/00 |

The present search report has been drawn up for all claims

| Place of search | Date of completion of the search | Examiner |
|---|---|---|
| VIENNA | 10-10-1984 | BERGER |